# EUROPEAN PATENT APPLICATION

(11) **EP 1 696 122 A2**
(43) Date of publication of application: **30.08.2006**
(21) Application number: 06396005.8
(22) Date of filing: 31.01.2006
(51) Int. Cl.: F03D 7/02

(54) **Method for controlling a wind power plant**

(30) Priority: 31.01.2005 FI 20050108
(71) Applicant: Winwind Oy, 00210 Helsinki (FI)
(72) Inventor: Böhmeke, Georg, Winwind Oy, 00210 Helsinki (FI)
(74) Representative: Helino, Timo Kalervo

(57) **Abstract**

The invention relates to a method for controlling a wind power plant in an exceptional situation such as a fault situation or as the wind speed exceeds a normal maximum speed determined for production use. The wind power plant comprises a horizontal-axis and at least two-blade rotor connected to a generator, both being turntable about a vertical axis for keeping the plane of rotation of the rotor substantially perpendicular to the direction of wind. According to the invention, the blade angles of the rotor blades are adjusted to a minimum operating angle, close to the storm position of 90° for spinning the rotor and the generator together with it to produce the necessary power to turn the rotor and to keep it to the direction of wind during the duration of the aforementioned exceptional situation.

## Description

### FIELD OF THE INVENTION

The invention relates to a method as defined in claim 1 for controlling a wind power plant in an exceptional situation, such as during a storm, a network interruption or failure.

### BACKGROUND OF THE INVENTION

Conventionally, as the wind speed exceeds given power plant specific limits, usually 20 - 25 m/s, the rotor blades are turned into a storm position i.e. angle of 90° from the plane of rotation of the rotor, that is to say so as to be parallel to the wind. The blades are locked into this position and the rotor is de-activated for the time it blows a gale. As the wind speed decreases sufficiently, the wind power plant is re-activated.

The prior-art technology involves several disadvantages. During a storm there can be a network interruption, particularly because trees are falling on top of large-capacity lines. The wind speed and direction can change several times during a gale, resulting in that the rotor is not any more disposed directly against the wind, because the necessary energy is not supplied during a network interruption. In that case, the rotor is subjected to lateral wind causing such great forces that the equipment is not necessarily dimensioned to. The rotor direction system requires electrical energy that is not available during a network interruption and while the rotor is not spinning.

Another problem, especially during winter time, is how to keep the machinery warm, which is difficult during a network interruption without a separate heat source. One can either let the machinery cool, resulting in the risk of condensation of water vapour and possible internal rust damages, or provide a separate diesel generator or equivalent to produce the necessary electricity and heat.

A third problem is the lubrication of the gear box because when braking, the torque moment of the brake is transmitted through gearing. In that case, the small movements of the rotor in a turbulent wind field cause micro movements in the gearing, resulting in damages unless the gear box is lubricated substantially continuously. This, too, requires auxiliary energy.

As already stated above, in principle, many of the problems presented could be solved using a suitable aggregate. This is, however, an expensive solution both in terms of investment and operating costs. Another, nearly equally expensive, solution to the problems presented would be building a separate small windmill in the same conjunction, for example, at the end of the engine room of the wind power plant. Its power could be some kilowatts, and advantageously it would be vertical-axis in structure, that is to say, for example, a Darrieus rotor or Savonius rotor. This small power plant would be so dimensioned that it is only used under heavy wind, and it would provide sufficient power to maintain given functions of the wind power plant.

### OBJECTIVE OF THE INVENTION

It is an objective of the present invention to eliminate the disadvantages referred to above.

One specific objective of the present invention is to disclose a new type of solution enabling one to keep the wind power plant in operating condition continuously in various exceptional situations without the need for external energy and with minor costs.

One further objective of the invention is to disclose a method enabling one to minimise the detrimental effects that gales have on the structures of a wind power plant.

### SUMMARY OF THE INVENTION

The method of the invention is characterised by what has been presented in claim 1.

The method of the invention is designed to be used in the control of a wind power plant in various exceptional situations, such as interruptions of network, fault situations and as the wind speed exceeds a normal maximum speed determined for production use, which, depending on the wind power plant, usually varies between 20 and 25 m/s. The wind power plant comprises a horizontal-axis and at least two-blade rotor connected to a generator, both being turntable about a vertical axis for keeping the plane of rotation of the rotor substantially perpendicular to the direction of wind. According to the invention, in an exceptional situation, such as when the wind speed exceeds the maximum speed determined for the wind power plant, the blade angles of the rotor blades are adjusted to a minimum operating angle, close to the storm position of 90°. In this manner, the rotor and the generator together with it can be made to spin at a low rotational speed and to produce the sufficient power necessary to turn the rotor and keep it to the direction of wind during the duration of the aforementioned exceptional situation.

The method of the invention can be considered to be based on the insight that in various exceptional situations, when no electricity is supplied from the network and the wind power plant is not operating normally, it is possible to spin the rotor of the wind power plant at a very gentle speed and still gain a sufficient power for given basic functions.

Advantageously, in the method of the invention, the blade angles are locked into a given angle during the duration of the exceptional situation. When the angle adjusted and locked is sufficiently small, there is no danger that even a heavy gale would do damage to the structures of the power plant. It is, however, possible that the blade angles are adjusted to some extent about the minimum operating angle, for example so that the rotational speed is maintained low and standard.

As the minimum operating angle one uses 80-88, preferably 82-87, such as 85°. The minimum operating angle to be used can always be standard for a given wind power plant, but the lockable minimum operating angle of the blades can also be chosen for each case specifically, or adjusted.

In practice, in a heavy gale, the rotor is spinning at a very gentle speed when controlled in accordance with the invention, with rotational speeds of the order of 0.5-2 rpm, for example 1 rpm. Similarly, the power to be provided by the generator preferably is very low, preferably 1-5 kW, for example 2-4 kW, compared to the nominal power of the generator, varying between 500 kW and 5 MW. As the generator voltage excited using permanent magnets is low in that case, it is possible to use a coupling power source that transforms the electricity so as to be suitable. The coupling power source can include means for balancing the energy such as accumulators, two-layer condensers or other charging means.

The control method of a wind power plant in accordance with the invention has significant advantages compared to the prior art. Also during a gale and a network interruption, the wind power plant can be maintained operational, loads caused by lateral wind are avoided, the gear box is kept warm and lubricated, as well as all the monitoring functions of the control computer are maintained. The power plant does not necessitate any separate redundant power engines or big batteries, and the necessary coupling power source is cheap and dependable compared to it.

In the foregoing, the invention has been described by describing various alternatives thereof without limiting it merely to these; instead various embodiments of the invention are possible within the scope of the attached claims.

## Claims

1. A method for controlling a wind power plant in an exceptional situation, such as in a fault situation or as the wind speed exceeds a normal maximum speed determined for production use, the wind power plant comprising a horizontal-axis and at least two-blade rotor connected to a generator, both being turntable about a vertical axis for keeping the plane of rotation of the rotor substantially perpendicular to the direction of wind, **characterised in that** the blade angles of the rotor blades are adjusted to a minimum operating angle close to a storm position of 90° for spinning the rotor and the generator together with it so as to produce the necessary power to turn the rotor and keep it to the direction of wind during the duration of the aforementioned exceptional situation.

2. The method as defined in claim 1,
**characterised in that** the blade angles are locked into a given angle for the time the wind exceeds the aforementioned maximum speed or for the duration of some other disturbance.

3. The method as defined in claim 1,
**characterised in that** as the minimum operating angle one uses 80-88, preferably 82-87, for example about 85'.

4. The method as defined in any one of claims 1-3, **characterised in that** the lockable minimum operating angle of the blades is chosen according to the prognosis of wind speed of a forthcoming storm to be given in a weather forecast.

5. The method as defined in any one of claims 1-3, **characterised in that** the minimum operating angle of the blades is adjusted in a substantially stepless manner to maintain a given low standard rotational speed.

6. The method as defined in any one of claims 1-5, **characterised in that** the rotational speed of the rotor is selected to be between 0.5 and 2, preferably about 1 rpm.

7. The method as defined in any one of claims 1-6, **characterised in that** the power to be obtained from the generator is chosen to be between 1 and 5, preferably between 2 and 4 kW.

8. The method as defined in any one of claims 1-7, **characterised in that** in an exceptional situation, the low power to be obtained from the wind is also used in other monitoring tasks of the power plant, in the lubrication of the gear box and/or in the implementation of the heating.
